# EUROPEAN PATENT SPECIFICATION

(11) **EP 2 436 448 B1**
(45) Date of publication and mention of the grant of the patent: **17.06.2020**
(21) Application number: 10182190.8
(22) Date of filing: 29.09.2010
(51) Int. Cl.: B03B 9/06, B09B 3/00

(54) **Enhanced landfill mining process**
Verbessertes Verfahren zum Abbau einer Mülldeponie
Procédé amélioré d'exploration d'un dépôt de déchets

(43) Date of publication of application: 04.04.2012
(73) Proprietor: JM Recycling NV, 3500 Hasselt (BE)
(72) Inventor: Machiels, Louis, 3500 Hasselt (BE)
(74) Representative: V.O.

(56) References cited:
- WO-A1-2009/011588
- WO-A2-2009/111791
- DE-A1- 4 311 769
- US-B2- 7 772 453
- Klaus Wiemer, Brigitte Bartsch, Helge Schmeisky: "Deponien als Rohstofflagerstätten von morgen" In: K. Wiemer, M. Kern: "Bio- und Sekundärrohstoffverwertung IV", 2009, Witzenhausen-Institut, Witzenhausen, XP002626349, ISBN: 3-928673-54-8 pages 685-716, * the whole document *
- REINHARD GÖSCHL: "Deponierückbau im Emirat Sharjah", TIEFBAU, vol. 118, no. 2, 2006, pages 66-71, XP002626350, ISSN: 0944-8780

## Description

The invention relates to a method for obtaining a useful product from a landfill and to a useful product obtainable by the method.

A growing interest exists in using waste-materials as substitutes for natural raw materials in applications. For fresh waste-streams it is often possible to separate the waste-streams into different reusable material fractions - such as various inorganic fractions (*e.g.* glass, metal, ceramics) and into various organic fractions (*e.g*. plastics, paper, compostable waste) and/or to produce energy from the waste. Recycling of materials may be done where the waste has been generated or stored without the different fractions having been mixed or at professional waste treatment facilities, where also more complex waste, comprising a plurality of different kinds of materials, may be processed. For these streams it has become feasible to recover a considerable portion of re-useable materials from the waste streams. For instance, US 4,624,417 describes a method for processing solid municipal or industrial waste into a chemical intermediate substrate for production of energy sources and non-energy related by-products. US 7, 772, 453 B2 discloses a method for obtaining a construction material and a chemical of industrial interest, by separating municipal solid waste into a plurality of material fractions, thereby obtaining a metal fraction, a carbon compound fraction for forming syngas and a slag and a rest-material fraction. The syngas is used to obtain hydrogen and the construction material is prepared from the slag.

However, for existing land-fills, in which waste of a complex composition may have been stored for decades, it is already a challenge to recover a minor part of the materials for re-use. The composition of the waste is generally rather heterogeneous (comprising varying materials of varying qualities, in varying quantities, usually having a wide particle size distribution) and highly variable. The composition varies with the type of waste that has been dumped on a specific spot, the age of the waste and the extent to which it has aged over time. Aging can significantly affect the composition and the physical properties of certain waste types. In that sense, register information (landfill inventory) on what has been dumped alone is insufficient to assess the way the landfill-waste should be processed as register information tells little about the actual conditions of the waste. Additional conditions that hamper the processing of the waste are *e.g.* a high moisture content, whereby it becomes very difficult to separate fractions, and a high level of fines caused by the landfilling process (*e.g*. compacting of the landfill, adding intermediate or closing layers e.g. sand or soil).

Further, often, a large part of the waste that is to be recovered from the landfill is already a mixture of residues that originate from often processes wherein as many as possible valuable materials have been recovered, which means that it is rather difficult to recover further materials with an sufficiently high intrinsic economic value. This is especially the case for the wastes that have been land-filled during the last decades. New process flows will be needed to separate and clean the various fractions in such a way that they can be recuperated. The term 'recuperation' is used herein in general for any activity wherein from landfill-waste, a fraction thereof, or an area in or on which landfill-waste has been stored something useful is made. Recuperation in particular includes recycling of a material from the landfill-waste to prepare the same or a similar material (*e.g.* glass-recycling, ceramics-recycling, paper-recycling, metal-recycling), other forms of valorisation of the landfill-waste or a fraction thereof, such as conversion into fuel, a construction material, or into energy, and renovation of the landfill area, *e.g.* to provide nature, a recreational area, urban or industrial zone.

In general; a plurality of distinct separation steps and other treatments are needed to recover a product of interest. In processing of solid waste it is common practice to design and optimise each treatment separately. Such an optimisation neglects interdependencies between neighbouring treatments and in many cases does not allow optimisation of the entire process flow.

WO 2009/111791 relates to a method of remediating landfill waste which aims to efficiently recycle and reuse substantially valuable waste constituents in existing landfills. The method comprises mining the waste from a landfill; screening the waste; shredding the waste; magnetically separating ferrous metals from the waste; performing a solid distillation de-polymerisation process on the waste to produce hydrocarbon gas, water vapour, and dry solid waste; distilling the hydrocarbon gas to produce hydrocarbon liquid; recycling hydrocarbon gas to produce heat to operate the solid distillation process; and cracking and hydrotreating the hydrocarbon liquid to produce synthetic fuel. In paragraph [0004] it is stated that a process is provided that effectively extracts and recycles substantially all valuable constituents from landfills. The inventors contemplate that this technology is less suitable for highly heterogeneous wastes, in particular in that a relatively large portion of the waste may be left unused for the preparation of a useful product.

It would be desirable to provide a method that allows for an increased portion of the waste to be used for providing a useful product, in particular a method wherein also waste material that is conventionally not considered valuable is used for providing a useful product.

Further, it would be desirable to provide a method that allows a robust method, for processing landfill wastes, in particular a method that is more robust, also if a highly heterogeneous landfill waste is processed.

In particular it would be desirable to provide a method that also allows the production of a gaseous fuel from (highly heterogeneous) landfill waste, in particular a highly heterogeneous landfill waste.

It is an object of the present invention to provide a novel method for obtaining a useful product from landfill-waste, that may be used as an alternative to known technology, such as the technology referred to in the above cited document.

Further it is an object to provide a novel product obtainable from landfill waste.

It is in particular an object to address one or more of the drawbacks of the above cited document.

More in particular it is an object to address one or more of the above desires.

One or more further objects that may be addressed will be apparent from the description below.

It has been realised by the present inventors that one or more said objects are addressed by processing landfill waste in a specific way.

Accordingly, the present invention relates to a method for obtaining a construction material and a chemical of industrial interest, wherein the method comprises-opening a landfill which has been closed with a layer of earth or other geological material;- taking landfill waste from the landfill, said landfill waste comprising one or more metals and materials based carbonaceous materials and further one or more mineral materials of geological origin;- separating the waste into a plurality of material fractions, thereby obtaining a metal fraction, a carbon compound fraction for forming syngas and a slag, and a rest-material fraction;- forming syngas and a slag from the carbon compound fraction;- using the syngas to obtain the chemical of industrial interest; and- preparing the construction material from the slag.

The present invention in particular provides a comprehensive, stable and robust method to direct landfill waste streams to the right technologies (Waste-to-Energy and/or Waste-to-Material) at the right times, with respect to the technical and, in general also, economic feasibility and the sustainability of the landfill mining activities.

'Stability' as meant herein refers to tendency of fluctuations in output (product) in case of a constant input (land-fill waste of specific composition). The lower the fluctuation, the higher the stability.

'Robustness' as meant herein refers to the tendency of being able to provide an output (product) of a specific (satisfactory) quality under changing input conditions (waste composition). The larger the allowable fluctuations in order to maintain a satisfactory output, the more robust the system is.

A method according to the invention allows proper processing of the landfill-waste, and in particular of the waste streams (various material fractions) generated in a method according to the invention.

In particular, the invention allows an increase in quality of one or more useful products prepared in accordance with the invention. This is in particular accomplished by applying the Waste-to-Energy and Waste-to-Material technologies (see below for details) on the landfill-waste in a specific way, namely through a tailoring of the individual process steps based on the analysis of the landfill-waste.

The invention allows the processing of landfill waste such that a high portion of the waste is actually used for obtaining a useful product, also if the waste is highly heterogeneous. In particular, the invention allows the use of more than 85 wt. %, more in particular at least 90 wt. %, at least 92 wt. %, at least 95 wt. %, or at least 98 wt. %. It is contemplated that - if desired - essentially all the waste material can be used for obtaining a useful product, whereby in general it is possible to avoid the need to dump (a substantial amount of) residual waste that could not be processed

In accordance with the invention it is possible to determine the technical and, if desired, economic boundaries by assessing a number of scenarios (*e.g.* maximum materials recovery, maximum energy recovery, maximum economic gains under current conditions, maximum environmental benefits under changing legislation, hybrid scenarios of materials recovery& energy recovery, materials and/or energy recovery and environmental benefits, *etc.*), and selecting specific method steps on the basis of one or more of said scenarios. Separate scenarios can be used for separate fractions of the materials, which scenarios may be combined in the overall-method for obtaining product(s) from the waste.

It is an advantageous aspect of a method of the invention that it allows changes in the method steps over time, *e.g.* as the composition of the landfill-waste that is used as a raw material for the method of the invention changes or as the demand for a specific product changes. For example, in particular for carboncontaining materials one may choose to use the carbon containing material for providing a material product, *e.g.* use a fraction rich in cellulose (such as paper, wood, cotton or the like) for making paper or a fraction rich in plastics to make recycled plastic (*i.e.* a Waste-to-Material scenario) or one may choose to convert the waste material into energy (*i.e.* a Waste-to-Energy) scenario). Over time, the invention allows swapping from one scenario to another, or adapting a hybrid scenario of the two.

Another example is a granulate that has a negative value (requiring a cost to dispose it) or for which a low value can be obtained, when recuperated in a conventional manner. Such materials can increase their value through *e.g.* mineral carbonation where CO₂ is captured by the granulate. This way CO₂ emission costs can be avoided or at least reduced, generating a positive value or a strong value for the granulate.

The term "or" as used herein is defined as "and/or" unless specified otherwise.

The term "a" or "an" as used herein is defined as "at least one" unless specified otherwise.

When referring to a physical state (gas, liquid, solid) of a substance (*e.g*. a fuel), the state at 25 °C is meant, unless specified otherwise.

When referring to a noun (*e.g.* a compound, an additive, *etc.*) in the singular, the plural is meant to be included.

Further, when referring to 'the fraction' , 'the material' or another noun in combination with a definite article (the), this should generally be understood as at least part of that noun, unless specified otherwise. Usually it will mean a major part or all of that noun, in particular at least 25 %, at least 50 %, at least 75 % or at least 90 %.

As follows from the above, the term 'product' is used herein in a broad sense. The product may be material (composed of matter) or immaterial.

Material products include chemical substances, materials, or objects. Preferred examples of material products obtainable in accordance with the invention include water (clean water, *i.e.* suitable for potable reuse or process water application), landfill gas, restored nature, glass, ceramics, fine fractions, aggregate fractions, ferrous metals, non-ferrous metals, plastics, paper, wood, textiles, refuse derived fuel, hydrogen, syngas (also known as synthesis gas, a gas mixture comprising carbon monoxide and hydrogen), vitrified slag, CO₂, building materials. A process for obtaining a material product from waste is also referred to as Waste-to-Material (WtM).

Energy is an immaterial product. In particular, an immaterial product may be selected from power (electricity) and heat. The immaterial product may be provided in or on a carrier for it, such as a heat carrier (*e.g*. steam, hot air are examples of energy with a carrier). A process for obtaining energy from waste is also referred to as Waste-to-Energy (WtE).

The landfill waste may be obtained in any way from any kind of landfill. The landfill is generally first opened, it has been closed, *e.g*. with a layer of earth or other geological material. Then the waste is taken from the landfill (mined). The excavated area, once all the waste has been removed, may be restored into a useful area, *e.g*. nature, which may be used for recreational purposes if desired.

The composition of the landfill waste is not critical. It generally is heterogeneous in composition, *i.e.* it generally comprises a plurality of different materials. In particular, the waste usually comprises in particular one or more metals (metal fraction) and materials based on carbonaceous materials (carbon compound fraction). Further, one or more materials selected from mineral materials of a geological origin (soil, sand and other fines, aggregate), glass, ceramics and other waste materials may be present in landfill waste. Herein after the term 'material fraction' will be used for a specific (group of) material(s) of a specific kind, *e.g*. the metal fraction is the material fraction for the metals present in the waste, or obtained from the waste. The fractions may be subdivided - and separated - in a method according to the invention.

As will be understood by the skilled person, in practice, a fraction of a specific material obtained from the waste may still comprise some material of a different kind, especially before further refining a fraction taken from the waste. In general though such material fraction, when recovered from the waste, is enriched in the specific material compared to the content in the waste material from which it has been taken. The enrichment (and thus the final content) of a specific material in a specific material fraction may be chosen within wide limits, as desired. In general, in an upstream part of the method of the invention the level of enrichment may still be relatively low, whereas the level of enrichment will be relatively high downstream in the method (in particular where a product of interest is obtained). Usually, when referred to a specific material fraction, the fraction will consist for more than 50 % of that specific type of material. In particular a specific material fraction may consist for 80-100 wt. %, more in particular at least 85 wt. %, at least 90 wt. %, at least 92 wt. %, at least 93 wt. %, at least 95 wt. % or at least 98 wt. % of that specific material. A specific material fraction may essentially consist of that specific material. In practice, depending on the intended purpose, a significant amount of one or more other materials may be present. Thus, the content of the enriched material in a specific fraction may be 99 wt. % or less, 96 wt. % or less or 93 wt. % or less.

The metal fraction is enriched in metals present in or taken from the waste. It may be subdivided in ferrous-metals (iron and alloys of iron that are ferromagnetic; ferrous-metals may be recovered magnetically) and non-ferrous materials (which are not recovered magnetically).

Carbon compounds are all compounds comprising carbon. Such compounds are also known as organic compounds. It should be noted that organic compounds include biological compounds (such as natural carbohydrates, *e.g*. cellulose, lignans *etc.*) and synthetic organic compounds (such as carbon based polymers). The carbon compound fraction is enriched in materials based on such compounds. Preferred examples of such materials are plastics, paper and textiles, and biological waste material (other than wood *e.g*. waste material from plants). The carbon compound fraction may be subdivided in a plastics, a paper, a textile, and a residual fraction (if any). In an embodiment, this fraction is subdivided based on differences in density. A carbon compound fraction may be used in particular for recycling purposes (*e.g*. recycled paper, recycled plastic and the like), for preparing a different type of material product (*e.g*. syngas, a hydrocarbon, an alcohol) or for WtE.

Glass and ceramics may be enriched in one glass&ceramics fraction or be subdivided in separate fractions. These materials may in particular be used for recycling purposes, or a secondary filler, *e.g.* for concrete.

The mineral materials of a geological origin may be enriched in a single fraction. If desired, the fraction is subdivided in more fractions, in particular based on differences in size. *E.g.* it may be subdivided in one or more fines fractions and one or more aggregate fractions. Fines in particular have an average size of 4 mm or less, Aggregates in particular have an average size of more than 4 mm. Aggregate may in particular be separated in a fraction having an average size of more than 4 mm but less than 10 mm and a fraction having an average size of 10 mm or more. A mineral material fraction may in particular be used for preparing a construction material.

The term 'rest-material fraction' is used herein for the fraction that remains after recovering one or more material fractions from the waste-material. Thereby the content of the rest-material depends on the method steps performed on the waste-material. As will be understood by the skilled person, the rest-material will have a reduced content of a specific kind of material of which a material fraction has been recovered from the waste. In an advantageous embodiment, at the process-end of the method the rest-material fraction, if any, has a relatively low content of metals, organic compounds, glass and ceramics, compared to the waste-material.

In accordance with the invention, data are acquired on the qualitative and quantitative composition of the waste, which data in particular include data on one or more of the following: the moisture content, the metal content, the content of carbon compounds, the glass content, the ceramics content, the content of mineral materials of geological nature, the particle size distribution of the waste. Such data can be obtained making use of analytical techniques known *per se* . See *e.g.* the BAT (Best available techniques) Reference Document (BREF) entitled "Waste Treatment Industries" as published by European Commission in August 2006 (http://www.emis.vito.be/sites/default/files/pagina/BREF_waste_treatment.pdf)

As mentioned above, a method according to the invention comprises acquiring data on the composition of the waste. This is advantageous in that efficiency is improved. Further, this is advantageous in that the part of the land-fill waste that is recuperable is increased. In particular, the acquisition of data in combination with selecting the method steps, optionally taking into account a predetermined scenario, which may be changed over time, allows for a relatively constant quality of the obtained product(s) or allows for the preparation of one or more products with increased quality compared to comparable products obtained from landfill-waste obtained by a method known in the art. For instance, a fuel may be obtained with increased caloric value or a product may be obtained with reduced levels of undesired components.

In an embodiment, the acquisition of data comprises field tests. The acquisition of data may in particular be based on a number of trial excavations and the examination of the waste samples both visually, as well as through manual sorting tests. For example, during these sorting tests the samples can be screened (sieved) after drying at a specific cut-off size, (*e.g.* at a cut-off of 10 mm) and weighed. The amount of different material fractions, in particular carbon compound fraction (which may be subdivided in wood, paper/cardboard, textile, plastics), metal fraction (which may be subdivided in ferrous and non-ferrous), glass fraction, ceramics fraction (which may be combined with the glass fraction), stone fraction and "unidentified" fraction are determined for every fraction larger than the cut-off( e.g. > 10 mm). The individual fractions are subsequently sampled and further analyzed.

In particular, data acquisition may include determination of the caloric value, the ash content and the elementary composition (in particular C, H, N S, Cl, F and Br) in the different material fractions (based on selected samples of the fraction). This allows to identify the valorisation potential, through Waste-to-Material or Waste-to Energy, of the separated fractions.

Preferably, a representative number of samples is taken before mining the land-fill waste, in such as way that at least 75 % of the land-fill waste is assessed for both quantitative and qualitative composition (quantity and nature of the various fractions),

Further, it is preferred that information is acquired on the level of ageing of the landfill-waste, making use of a calibrated aging model. Such information can be obtained by comparing the total organics content (TOC) in the landfill waste and compare it with the TOC content in the landfill waste at the time of dumping the waste, if such information is available, or by determining the TOC decay curve.

The average decay (aging) can be described reasonably well with a first order decay curve [C(t)= C₀ e^{-kt}]. The factor 'C₀' represents the concentration of TOC in the waste at the time of burial; 'k' is the first order rate constant and reflects the rate at which the degradation of carbon-rich material occurs. The estimated value can be compared to the first order rate constant often used in models to predict methane recovery from landfills.

Thereafter, method steps are selected for obtaining the useful product on the basis of the data thus obtained. For this, depending on the intended product(s) and the acquired data, use may be made of a predetermined scenario (see also above when referring to the scenarios), an existing scenario may be modified, or a new scenario may be designed.

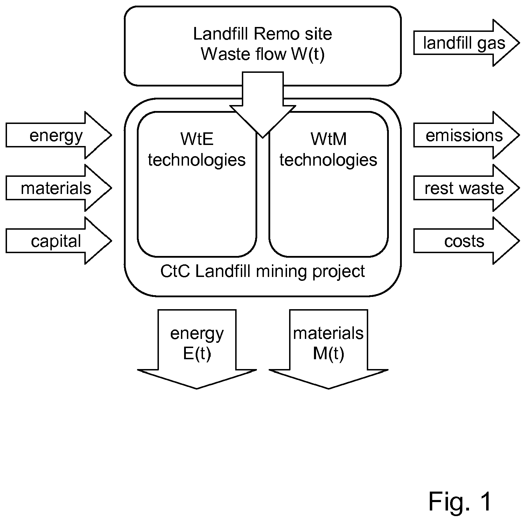

Figure 1 illustrates how different aspects can be taken into account when selecting the method steps. In particular these aspects comprise:
- materials: composition of the landfill-waste (land-fill waste quality)
- additional materials and energy (not originating from the waste, if any), that may be needed in order to obtain the desired useful product(s), in view of the composition and a selection of method steps that is considered
- emission-levels (such as flue gas) for a selection of method steps that is considered
- percentage of waste that is not recuperable for a selection of method steps that is considered (rest-waste)

On the basis of such aspects, it can be determined which material and/or immaterial products are obtainable by a specific selection of method steps, in a satisfactory quantity and quality, and with a satisfactory low level of emissions and non-recuperable waste. For commercial reasons, in practice required investments and expected added value to the product will usually also be taken into account.

If desired the selected method steps or the scenario may be changed over time, in particular as a result of a change in composition of the landfill-waste and/or product demand in the market. For instance, one may change from a WtE scenario to a WtM scenario, or change the part of the waste that is used for WtM relatively to the part that is used for WtE.

Next, examples of scenarios that can be followed are given. Several of these are illustrated by a Figure. If desired, one or more of the mentioned steps can be omitted or one or more steps can be added, in particular, the subject-matter of two or more of these scenarios or part(s) thereof may be combined.

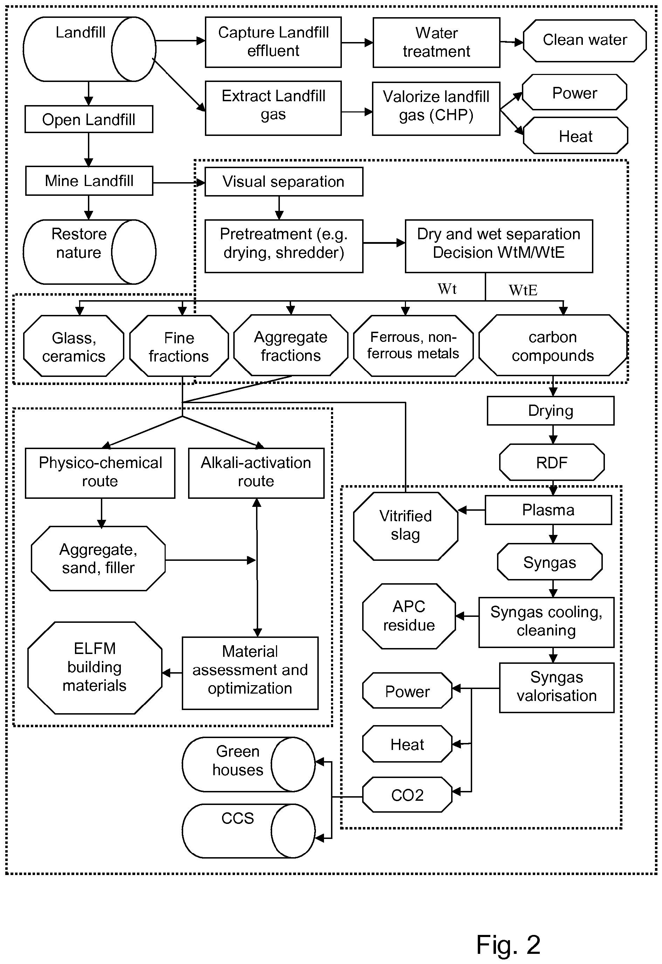

Figure 2 shows a scenario, wherein syngas is made and a building material. The syngas may be used for power, heat and CO₂ production. The 'Fine fractions' and aggregate fractions' are rich in mineral materials from geological origin. RDF is Refuse Derived Fuel, CHP is Combined Heat Power, ELFM building materials are building aggregates, gravel replacement and cement replacement, CCS is Carbon Capture and Storage, APC is Air Pollution Control. In particular, the capturing of the landfill effluent and extraction of landfill gas, as well as method steps downstream thereof, are usually carried out before completion of the landfill mining, and discontinued at the start or at the completion of the mining.

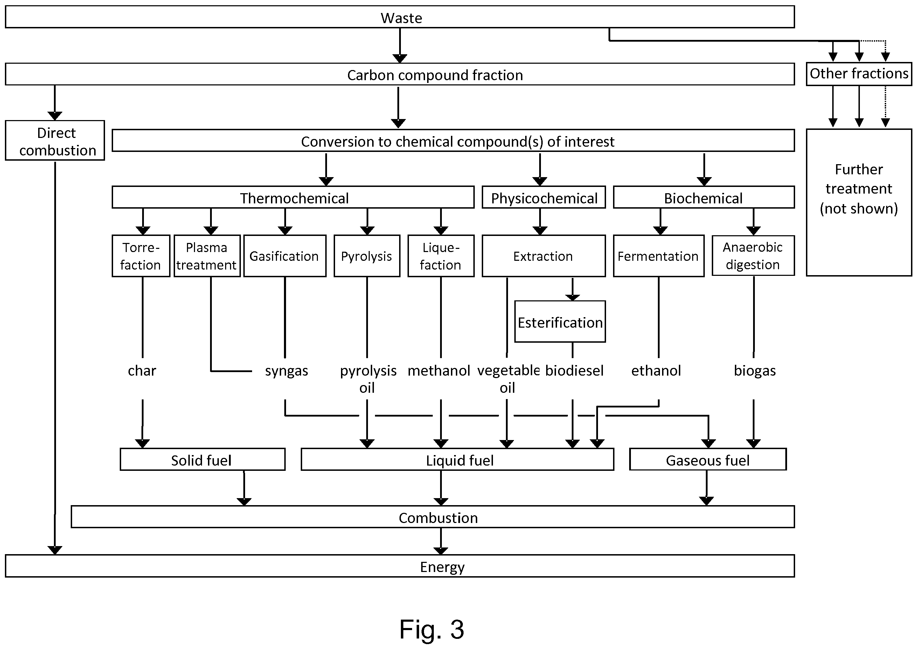

Figure 3 shows yet another example of a scenario for a carbon compound fraction.

Next, an example is given of a scenario wherein the type of recuperation for a specific kind of material is selected depending on the purity in which that material is obtained after recovering it from the waste. The purity that is obtainable may depend on the initial composition of the waste and the separation technology that is practically available (if only use is made of a certain existing separation facility). The example is given for PET, but may be applied for other plastics or other kinds of materials, *mutatis mutandis.* This scenario takes into account that a choice can be made to use the material for primary recuperation (recycling to obtain essentially the same kind of product, in this example PET that can be used to make a plastic product, *e.g.* by re-extrusion), for secondary recuperation (use it without substantial chemical modification for a purpose for which the product specifications are less demanding, *e.g.* PET as a filler in concrete), for tertiary recuperation (conversion into a different material/compound, *e.g*. converting PET into a hydrocarbon (olefin) or syngas)), or for quaternary recuperation (burning and obtaining energy). Primary recuperation generally requires the highest purity, secondary the next highest purity, tertiary the next highest purity and quaternary recuperation the lowest purity in order to obtain satisfactory results. Specific minimally required purities depend on the specific material to be recuperated, the available technology (if only use is made of existing technology, product specifications, government regulations and the like). A suitable minimum purity can be determined based on the information disclosed herein including in the cited references, common general knowledge, and optionally a limited amount of routine testing.

After selecting the method steps these are carried out. Each step may independently be selected from continuous method steps (continuous input, continuous output), semi-continuous method steps (examples of semi-continuous methods steps are methods with continuous input of material or intermediary product and batch-wise output of (intermediary) product; methods with batchwise input of raw material or intermediary product and continuous output of (intermediary) product; methods with intermittent input of raw material or intermediary product and/or intermittent output of (intermediary) product), and batch method steps.

As mentioned above, the method at least comprises separating the waste into a plurality of material fractions. Parts of the landfill-waste that can be identified by the naked eye, usually (largely intact) macroscopic objects such as tyres, electronic equipment, vehicles and recognisable parts thereof, may conveniently be separated from the bulk of the landfill-waste before further treatment, making use of a visual screening technique. *E.g*. they can be picked out manually by machine.

Advantageously, the landfill-waste, from which large pieced of materials may already have been recovered, is subjected to one or more pre-treatment steps prior to (further) separating the waste into a plurality of material fractions. These pre-treatment steps may in particular be selected from the group of visual screening, washing, pre-drying, drying, and size-reduction treatments, such shredding, milling (*e.g*. with cascade ball mill), or crushing. One or more of said steps may further be carried out at any-point down stream of the process to one or more of the fractions obtained from the waste. Suitable conditions may be based upon methodology known *per se* in the art (see *e.g.* BAT (Best available techniques) Reference Document (BREF) entitled "Waste Treatment Industries" as published by European Commission in August 2006.).

Usually, at least a metal fraction and a carbon compound fraction are obtained, as well as a rest-material fraction (containing the remainder of the waste material). Advantageously, one or more further material fractions are obtained and/or the material fractions are further separated in subdivided fractions (*e.g.* a ferrous metal fraction and a non-ferrous metal fraction, in particular such as mentioned herein above. Suitable conditions may be based upon methodology known *per se* in the art and the information disclosed herein (see *e.g.* BAT (Best available techniques) Reference Document (BREF) entitled "Waste Treatment Industries" as published by European Commission in August 2006.)

In an advantageous embodiment, the waste is separated into a metal fraction, a carbon compound fraction, a rest-material fraction, and further into a glass and/or ceramics fraction.

Separating may in particular comprise one or more of the following techniques. size-based separations (*e.g*. drum-screening, sieving), magnetic separations (*e.g*. using a band magnet), density-based separations, eddy current separations. A plurality of steps can be carried out in order to obtain a specific material fraction with a high content of the specific material and/or to obtain a high recovery degree of the material from the waste, such that little or no material is left as residual waste.

The ferrous metal fraction may in particular by obtained using a magnetic separation.

A density based separation (which may make use of air or another gas or a liquid, in particular water). A gas based density based separator may in particular be used to separate carbon compounds, especially paper and optionally plastics with a relatively low density, from materials having a higher density (metals, wood, textiles, relatively dense plastics, glass, ceramics, relatively coarse mineral particles)

A liquid based density separator is for instance very suitable to recover textiles, wood, paper, (most) plastics from mineral materials (fine and coarse).

The landfill-waste material or any of the fractions may be subjected to one or more treatments selected from the group of physical treatments, chemical treatments, biological treatment, and combinations thereof, in particular, thermochemical treatments, physicochemical and biochemical treatments.

Examples of treatments that may be solely physical are heat-treatments and irradiation with electromagnetic waves.

Thermochemical treatments include pyrolysis, torrefaction, gasification, liquefaction.

Physicochemical treatments include extraction and distillation.

Esterification is an example of a chemical process. Esterification may in particular be used for the production of a liquid fuel, such as biodiesel. It is in particular suitable as an additional treatment, after a carbon compound fraction has been subjected to a physicochemical process wherein an alcohol or organic acid has been formed.

Biochemical treatments include fermentation (anaerobic digestion) and other ways of converting a material making use of a micro-organism. Figure 3, shows an overview from which one or more techniques may be selected in order to obtain one or more of the products shown in the Figure 3. Other techniques include microwave-heating and photochemical conversion.

Such techniques are known in the art, see *e.g.* BAT (Best available techniques) Reference Document (BREF) entitled "Waste Incineration" as published by European Commission in August 2006.);
for the preparation of material products: http://www.emis.vito.be/sites/default/files/pagina/BREF_waste_treatment.pdf for obtaining energy: http://www.emis.vito.be/sites/default/files/pagina/BREF_waste_incineration.pdf.

Both pyrolysis and gasification differ from incineration in that they may be used for recovering the chemical value from the waste, rather than its energetic value.

In a preferred embodiment, one or more of said treatments selected from the group of physical treatments, chemical treatments, biological treatments, thermochemical treatments, physicochemical and biochemical treatments are used for treating a carbon compound fraction. The carbon compound fraction may in particular subjected to plasma treatment, gasification or the like, in order to prepare syngas.

The preparation of syngas in accordance with the invention is particularly useful because it can be used to make a gaseous fuel, in particular synthetic natural gas (methane), synthetic petroleum (via the Fischer-Tropsch process), or another chemical of industrial interest, *e.g*. ammonia or methanol. Further, hydrogen may be recovered from syngas. In a convenient method, CO in the syngas is converted into CO₂ after which the hydrogen is separated. This conversion and separation can be accomplished in a manner known *per se.*

In accordance with the invention, syngas is usually prepared using a thermochemical process, in particular a slag-forming process, *e.g.* a plasma treatment or a gasification treatment. In a specific embodiment, the slag-forming process comprises both a plasma treatment and a gasification treatment. A slag-forming process in a method according to the invention is in particular advantageous in that no or low levels of ash are formed. Further, the inventors realised that the slag obtained in accordance with the invention, in particular a vitrified slag, may be used for (the manufacture of) a construction material.

For gasification a fluid bed gasifier is particularly suitable.

In a particularly preferred method of the invention for preparing syngas, the carbon compound fraction is subjected to a plasma treatment and a gasification treatment. For instance, use may be made of a fluid bed gasifier in combination with a plasma converter.

The provision of (syngas for) a gaseous fuel is in particular advantageous over the provision of liquid or solid fuel for providing a fuel which can be converted into energy with a high efficiency and with reduced emission of compounds that are considered detrimental to the environment. Further, flue gas formation tends to be reduced when gaseous fuel is combusted, whereby the provision of (syngas for) gaseous fuel.

Further, anaerobic digestion may be used to convert carbon compound fraction into biogas. The preparation of a gaseous fuel is particularly preferred in accordance with the invention, in order to provide a particularly robust method.

However, if desired, the carbon compound fraction may be use to make a solid or liquid chemical compound or composition, *e.g.* for use as a fuel, *e.g.* using any of the technologies shown in Figure 3. A particularly suitable method to obtain syngas has already been outlined above.

For the preparation of both syngas and slag, a plasma treatment is in particular suitable.

Microwave-heating or photochemical conversion may be used to improve the quality of especially the syngas. Such treatment may further be used to improve the quality of the slag. Microwave-heating or photochemical conversion may further be used to improve the effectiveness or efficiency of the plasma treatment.

In an advantageous method of the invention, in particular a method wherein a gaseous useful product, such as syngas and/or a gaseous fuel (in particular a fuel comprising methane) is obtained, the carbon compound fraction is obtained by
- if desired, subjecting the waste to a size reduction treatment;
- removing ferrous metals from the waste;
- separating the (size-reduced) waste to a size-fractionation step, thereby separating the waste into a first size-fraction comprising large waste-material particles, a second size-fraction comprising small waste-material particles and _ if desired _ a third size-fraction comprising waste-material particles of an intermediate size; and
- recovering the carbon compound fraction from one or more of the size-fractions, wherein - if the carbon compound fraction is recovered from more than one size-fraction, these recovered fractions may be combined before further use.

In particular, the recovery of the carbon compound fraction may comprises subjecting one or more of said size-fractions to a density-based separation wherein carbon compound materials having a relatively low density (such as paper and low-density plastics) are separated from materials having a relatively high density (such as metals, high-density plastics, wood). In such a method, the carbon compound materials may in particular be recovered from the materials having a relatively high density.

In a method wherein the landfill-waste has been subjected to a size-fractionation step, as indicated above, the metals may in particular recovered from the second size-fraction comprising small waste-material particles, and the remainder of said second size-fraction is subjected to a separation step wherein inorganic materials (such as sand and coarser inorganic materials) are removed from the second size-fraction, which separation comprises a density separation step wherein a fraction enriched in carbon compound materials and a fraction enriched in the inorganic materials is obtained.

A water-based separation technique is particular suitable as a density separation step wherein the fraction enriched in carbon compound materials is obtained. Suitable water-based separation techniques are known in the art. These include sink-and-float method, jigging, water drums, aqua-motors and the coal spiral. The fraction enriched in carbon compound materials, obtained by the water-based separation step is advantageously subjected to a size-separation step, thereby obtaining an organics-rich sludge and a carbon compound fraction. The organic sludge may be used to obtain methane, ethanol or another useful compound by using is as a substrate for a micro-organism capable of converting it into a useful compound. For instance, the organics-rich sludge may be subjected to anaerobic fermentation, thereby obtaining methane or ethanol.

The invention is further particularly suitable to prepare a slag-based construction material is prepared comprises mixing at least part of the slag with at least part of the rest-material fraction. The construction material may in particular be selected from building aggregate (filling material) through physic chemical cleaning of the fines and aggregate material or as cement replacement through alkali activation.

## Claims

1. Method for obtaining a construction material and a chemical of industrial interest, wherein the method comprises
- opening a landfill which has been closed with a layer of earth or other geological material;
- taking landfill waste from the landfill, said landfill waste comprising one or more metals and materials based carbonaceous materials and further one or more mineral materials of geological origin;
- separating the waste into a plurality of material fractions, thereby obtaining a metal fraction, a carbon compound fraction for forming syngas and a slag, and a rest-material fraction;
- forming syngas and a slag from the carbon compound fraction;
- using the syngas to obtain the chemical of industrial interest; and
- preparing the construction material from the slag.

2. Method according to claim 1, comprising
- acquiring data on the qualitative and quantitative composition of the waste, which data in particular include data on the moisture content, on the metal content, on the content of carbon compounds and on the particle size distribution of the waste;
- selecting method steps for obtaining the chemical of industrial interest and construction material on the basis of the data thus obtained; and
- carrying out the selected method steps.

3. Method according to claim 2, wherein the acquiring of data comprises a combination of a field tests and the use of a calibrated aging model.

4. Method according to claim 2 or 3, wherein the selected method steps further comprise one or more pre-treatment steps of the landfill-waste material or a part thereof, which pre-treatment steps are selected from the group of visual screening (for removing large material pieces), pre-drying, drying, size-reduction treatments, shredding, milling (e.g. with cascade ball mill), and crushing.

5. Method according to any of the claims 2-4, wherein the selected method steps further comprise one or more treatment steps selected from the group of physical treatments, chemical treatments, biological treatments, thermochemical treatments, physicochemical treatment, biochemical treatments, in particular from the group of, drying, size-based separations, magnetic separations, density-based separations, eddy current separations, heat-treatments, irradiation with electromagnetic waves, plasma treatments, pyrolysis, torrefaction, gasification, liquefaction, fermentation.

6. Method according to any of the preceding claims, wherein the carbon compound fraction is subjected to a plasma treatment and a gasification treatment.

7. Method according to any of the preceding claims, wherein the waste material further comprises glass and/or ceramics, and the waste is separated into the metal fraction, the carbon compound fraction, the rest-material fraction, and further into a glass and/or ceramics fraction.

8. Method according to any of the preceding claims, wherein the rest-material fraction is subdivided in a fine rest-material fraction and an aggregate rest-material fraction.

9. Method according to any of the preceding claims, wherein a slag-based construction material is prepared comprises mixing at least part of the slag with at least part of the rest-material fraction.

10. Method according to any of the preceding claims, wherein hydrogen is recovered from the syngas.

11. Method according to claim 10, wherein CO in the syngas is converted into CO₂ after which the hydrogen is separated

12. Method according to any of the preceding claims, wherein the syngas is formed using a plasma treatment, which plasma treatment includes at least one treatment selected from the group of microwave-heating and photochemical conversion.

13. Method according to any of the preceding claims, wherein the carbon compound fraction is obtained by
- if desired, subjecting the waste to a size reduction treatment;
- removing ferrous metals from the waste;
- separating the (size-reduced) waste to a size-fractionation step, thereby separating the waste into a first size-fraction comprising large waste-material particles, a second size-fraction comprising small waste-material particles and - if desired - a third size-fraction comprising waste-material particles of an intermediate size; and
- recovering the carbon compound fraction from one or more of the size-fractions, wherein _ if the carbon compound fraction is recovered from more than one size-fraction, these recovered fractions may be combined before further use.

14. Method according to claim 13, wherein recovering the carbon compound fraction comprises subjecting the size-fraction to a density-based separation wherein carbon compound materials having a relatively low density (such as paper and low-density plastics) are separated from materials having a relatively high density (such as metals, high-density plastics, wood), thereby forming a fraction of materials having a relatively high density and a fraction of materials having a relatively low density.

15. Method according to claim 14, wherein carbon compound materials are recovered from said fraction of materials having a relatively high density.

16. Method according to claim 14 or 15, wherein metals are recovered from the second size-fraction comprising small waste-material particles, and the remainder of said second size-fraction is subjected to a separation step wherein inorganic materials (such as sand and coarser inorganic materials) are removed from the second size-fraction, which separation comprises a density separation step wherein a fraction enriched in carbon compound materials and a fraction enriched in the inorganic materials is obtained preferably a method wherein the density separation step wherein the fraction enriched in carbon compound materials is obtained is a water-based separation technique and wherein the fraction enriched in carbon compound materials is subjected to a size-separation step, thereby obtaining an organics-rich sludge and a carbon compound fraction.

17. Method according to any of the preceding claims, wherein the method steps are selected on the basis of a predetermined method scenario.

18. Method according to any of the preceding claims, wherein the slag is vitrified slag.

19. Method according to any of the preceding claims, wherein the construction material is a cement replacement, preferably a cement replacement through alkali activation.

20. Method according to any of the preceding claims, wherein the construction material is a building aggregate.

21. Method according to any of the preceding claims, wherein a chemical of industrial interest is obtained selected from the group consisting of methane, synthetic petroleum, ammonia and methanol, which is obtained by making said chemical of industrial interest from the syngas.

22. Method according to any of the preceding claims, wherein CO₂ is made from the syngas.

## Patentansprüche

1. Verfahren zum Erhalten eines Baumaterials und einer Chemikalie von industriellem Interesse, wobei das Verfahren umfasst
- Öffnen einer Deponie, die mit einer Erdschicht oder anderem geologischen Material verschlossen wurde;
- Entnehmen von Deponiemüll von der Deponie, der Deponiemüll umfassend ein oder mehrere Metalle und Materialien basierend auf kohlenstoffhaltigen Materialien und ferner ein oder mehrere Mineralmaterialien geologischen Ursprungs;
- Trennen des Mülls in eine Vielzahl von Materialfraktionen, dadurch Erhalten einer Metallfraktion, einer Kohlenstoffverbindungsfraktion zum Bilden von Synthesegas und einer Schlacke, und einer Restmaterialfraktion;
- Bilden von Synthesegas und einer Schlacke aus der Kohlenstoffverbindungsfraktion;
- Verwenden des Synthesegases, um die Chemikalie von industriellem Interesse zu erhalten; und
- Zubereiten des Baumaterials aus der Schlacke.

2. Verfahren nach Anspruch 1, umfassend:
- Erfassen von Daten über die qualitative und quantitative Zusammensetzung des Mülls, wobei die Daten insbesondere Daten über den Feuchtigkeitsgehalt, über den Metallgehalt, über den Gehalt an Kohlenstoffverbindungen und über die Partikelgrößenverteilung des Mülls einschließen;
- Auswählen von Verfahrensschritten zum Erhalten der Chemikalie von industriellem Interesse und des Baumaterials auf der Grundlage der auf diese Weise erhaltenen Daten; und
- Durchführen der ausgewählten Verfahrensschritte.

3. Verfahren nach Anspruch 2, wobei das Erfassen von Daten eine Kombination von Feldtests und die Verwendung eines kalibrierten Alterungsmodells umfasst.

4. Verfahren nach Anspruch 2 oder 3, wobei die ausgewählten Verfahrensschritte ferner einen oder mehrere Vorbehandlungsschritte des Deponiemüllmaterials oder eines Teils davon umfassen, wobei die Vorbehandlungsschritte aus der Gruppe von visuellem Screening (zum Entfernen großer Materialstücke), Vortrocknen, Trocknen, Größenreduktionsbehandlungen, Zerkleinern, Mahlen (*z. B.* mit Kaskadenkugelmühle), und Zerstampfen ausgewählt sind.

5. Verfahren nach einem der Ansprüche 2 - 4, wobei die ausgewählten Verfahrensschritte ferner einen oder mehrere Behandlungsschritte umfassen, ausgewählt aus der Gruppe von physikalischen Behandlungen, chemischen Behandlungen, biologischen Behandlungen, thermochemischen Behandlungen, physikochemischer Behandlung, biochemischen Behandlungen, insbesondere aus der Gruppe von Trocknen, größenbasierten Trennungen, magnetischen Trennungen, dichtebasierten Trennungen, Wirbelstromtrennungen, Wärmebehandlungen, Bestrahlung mit elektromagnetischen Wellen, Plasmabehandlungen, Pyrolyse, Torrefektion, Vergasung, Verflüssigung, Fermentation.

6. Verfahren nach einem der vorhergehenden Ansprüche, wobei die Kohlenstoffverbindungsfraktion einer Plasmabehandlung und einer Vergasungsbehandlung unterzogen wird.

7. Verfahren nach einem der vorhergehenden Ansprüche, wobei das Müllmaterial ferner Glas und/oder Keramik umfasst, und der Müll in die Metallfraktion, die Kohlenstoffverbindungsfraktion, die Restmaterialfraktion, und weiter in eine Glas- und/oder Keramikfraktion getrennt wird.

8. Verfahren nach einem der vorhergehenden Ansprüche, wobei die Restmaterialfraktion in eine feine Restmaterialfraktion und eine aggregierte Restmaterialfraktion unterteilt ist.

9. Verfahren nach einem der vorhergehenden Ansprüche, wobei ein auf Schlacke-basierendes Baumaterial hergestellt wird, umfassend Mischen wenigstens eines Teils der Schlacke mit wenigstens einem Teil der Restmaterialfraktion.

10. Verfahren nach einem der vorhergehenden Ansprüche, wobei Wasserstoff aus dem Synthesegas zurückgewonnen wird.

11. Verfahren nach Anspruch 10, wobei CO in dem Synthesegas in CO2 umgewandelt wird, wonach der Wasserstoff abgetrennt wird.

12. Verfahren nach einem der vorhergehenden Ansprüche, wobei das Synthesegas unter Verwendung einer Plasmabehandlung gebildet wird, wobei die Plasmabehandlung wenigstens eine Behandlung umfasst, ausgewählt aus der Gruppe von Mikrowellenerwärmen und photochemischer Umwandlung.

13. Verfahren nach einem der vorhergehenden Ansprüche, wobei die Kohlenstoffverbindungsfraktion erhalten wird durch
- falls gewünscht, Unterziehen des Mülls einer Größenreduktionsbehandlung;
- Entfernen eisenhaltiger Metalle aus dem Müll;
- Trennen des (größenreduzierten) Mülls in einem Größenfraktionierungsschritt, dadurch Trennen des Mülls in eine erste Größenfraktion, umfassend große Müllmaterialpartikel, eine zweite Größenfraktion, umfassend kleine Müllmaterialpartikel und - falls gewünscht
- eine dritte Größenfraktion, umfassend Müllmaterialpartikel einer Zwischengröße; und
- Zurückgewinnen der Kohlenstoffverbindungsfraktion aus einer oder mehreren der Größenfraktionen, wobei - wenn die Kohlenstoffverbindungsfraktion aus mehr als einer Größenfraktion zurückgewonnen wird, diese zurückgewonnenen Fraktionen vor der weiteren Verwendung kombiniert werden können.

14. Verfahren nach Anspruch 13, wobei Zurückgewinnen der Kohlenstoffverbindungsfraktion Unterziehen der Größenfraktion einer dichtebasierten Trennung umfasst, wobei Kohlenstoffverbindungsmaterialien mit einer relativ niedrigen Dichte (so wie Papier und niedrige Dichte Kunststoffe) von Materialien mit einer relativ hohen Dichte (so wie Metalle, hohe Dichte Kunststoffe, Holz) getrennt werden, dadurch Bilden einer Fraktion von Materialien mit einer relativ hohen Dichte und eine Fraktion von Materialien mit einer relativ niedrigen Dichte.

15. Verfahren nach Anspruch 14, wobei Kohlenstoffverbindungsmaterialien aus der Fraktion von Materialien mit einer relativ hohen Dichte zurückgewonnen werden.

16. Verfahren nach Anspruch 14 oder 15, wobei Metalle aus der zweiten Größenfraktion, umfassend kleine Müllmaterialpartikel, zurückgewonnen werden, und der Überrest der zweiten Größenfraktion einem Trennschritt unterzogen wird, wobei anorganische Materialien (so wie Sand und gröbere anorganische Materialien) aus der zweiten Größenfraktion entfernt werden, wobei Trennung einen Dichte-Trennungsschritt umfasst, wobei eine Fraktion, angereichert mit Kohlenstoffverbindungsmaterialien , und eine Fraktion, angereichert mit den anorganischen Materialien erhalten wird, vorzugsweise ein Verfahren, wobei der Dichte-Trennungsschritt, wobei die Fraktion, angereichert mit Kohlenstoffverbindungsmaterialien erhalten wird, eine wasserbasierte Trenntechnik ist, und wobei die Fraktion, angereichert mit Kohlenstoffverbindungsmaterialien einem Größentrennungsschritt unterzogen wird, dadurch Erhalten eines organisch reichen Schlamms und einer Kohlenstoffverbindungsfraktion.

17. Verfahren nach einem der vorhergehenden Ansprüche, wobei die Verfahrensschritte auf der Grundlage eines vorbestimmten Verfahrensszenarios ausgewählt werden.

18. Verfahren nach einem der vorhergehenden Ansprüche, wobei die Schlacke verglaste Schlacke ist.

19. Verfahren nach einem der vorhergehenden Ansprüche, wobei das Baumaterial ein Zementersatz ist, vorzugsweise ein Zementersatz durch Alkaliaktivierung.

20. Verfahren nach einem der vorhergehenden Ansprüche, wobei das Baumaterial eine Bauaggregat ist.

21. Verfahren nach einem der vorhergehenden Ansprüche, wobei eine Chemikalie von industriellem Interesse erhalten wird, ausgewählt aus der Gruppe bestehend aus Methan, synthetischem Erdöl, Ammoniak und Methanol, die erhalten wird, durch Herstellen der Chemikalie von industriellem Interesse aus dem Synthesegas.

22. Verfahren nach einem der vorhergehenden Ansprüche, wobei CO₂ aus dem Synthesegas hergestellt wird.

## Revendications

1. Méthode d'obtention d'un matériau de construction et d'un produit chimique d'intérêt industriel, dans laquelle la méthode comprend les étapes consistant à
- ouvrir un site d'enfouissement qui a été fermé avec une couche de terre ou d'un autre matériau géologique ;
- prélever des déchets de site d'enfouissement à partir du site d'enfouissement, lesdits déchets de site d'enfouissement comprenant un ou plusieurs métaux et matériaux à base de matériaux carbonés et en outre un ou plusieurs matériaux minéraux d'origine géologique ;
- séparer les déchets en une pluralité de fractions de matériau, en obtenant ainsi une fraction de métal, une fraction de composé carboné pour former du gaz de synthèse et un laitier, et une fraction de matériau résiduel ;
- former du gaz de synthèse et un laitier à partir de la fraction de composé carboné ;
- utiliser le gaz de synthèse pour obtenir le produit chimique d'intérêt industriel ; et
- préparer le matériau de construction à partir du laitier.

2. Méthode selon la revendication 1, comprenant les étapes consistant à
- acquérir des données sur la composition qualitative et quantitative des déchets, lesquelles données incluent en particulier des données sur la teneur en eau, la teneur en métal, la teneur en composés carbonés et la répartition granulométrique des déchets ;
- sélectionner des étapes de méthode d'obtention du produit chimique d'intérêt industriel et du matériau de construction sur la base des données ainsi obtenues ; et
- effectuer les étapes de méthode sélectionnées.

3. Méthode selon la revendication 2, dans laquelle l'acquisition de données comprend une combinaison de tests sur le terrain et l'utilisation d'un modèle de vieillissement calibré.

4. Méthode selon la revendication 2 ou 3, dans laquelle les étapes de méthode sélectionnées comprennent en outre une ou plusieurs étapes de prétraitement du matériau de déchets de site d'enfouissement ou d'une partie de celui-ci, lesquelles étapes de prétraitement sont sélectionnées dans le groupe comprenant un criblage visuel (pour éliminer les grands morceaux de matériau), un pré-séchage, un séchage, des traitements de réduction de taille, un déchiquetage, un broyage (par exemple avec un broyeur à boulets en cascade) et un concassage.

5. Méthode selon l'une quelconque des revendications 2 à 4, dans laquelle les étapes de méthode sélectionnées comprennent en outre une ou plusieurs étapes de traitement choisies dans le groupe comprenant des traitements physiques, des traitements chimiques, des traitements biologiques, traitements thermochimiques, traitement physicochimique, des traitements biochimiques, en particulier parmi les groupe comprenant un séchage, des séparations basées sur la taille, des séparations magnétiques, des séparations basées sur la densité, des séparations par courants de Foucault, des traitements thermiques, une irradiation avec des ondes électromagnétiques, des traitements au plasma, une pyrolyse, une torréfaction, une gazéification, une liquéfaction, une fermentation.

6. Méthode selon l'une quelconque des revendications précédentes, dans laquelle la fraction de composé carboné est soumise à un traitement au plasma et à un traitement de gazéification.

7. Méthode selon l'une quelconque des revendications précédentes, dans laquelle le matériau de déchets comprend en outre du verre et/ou de la céramique, et le déchet est séparé en la fraction métallique, la fraction de composé carboné, la fraction de matériau résiduel, et en outre en une fraction de verre et/ou e céramique.

8. Méthode selon l'une quelconque des revendications précédentes, dans laquelle la fraction de matériau résiduel est subdivisée en une fraction de matériau résiduel fine et une fraction de matériau résiduel agrégée.

9. Méthode selon l'une quelconque des revendications précédentes, dans laquelle un matériau de construction à base de laitier est préparé en mélangeant au moins une partie du laitier avec au moins une partie de la fraction de matériau résiduel.

10. Méthode selon l'une quelconque des revendications précédentes, dans laquelle de l'hydrogène est récupéré à partir du gaz de synthèse.

11. Méthode selon la revendication 10, dans laquelle le CO dans le gaz de synthèse est converti en CO₂, après quoi l'hydrogène est séparé.

12. Méthode selon l'une quelconque des revendications précédentes, dans laquelle le gaz de synthèse est formé en utilisant un traitement au plasma, lequel traitement au plasma comprend au moins un traitement choisi dans le groupe comprenant un chauffage par micro-ondes et une conversion photochimique.

13. Méthode selon l'une quelconque des revendications précédentes, dans laquelle la fraction de composé carboné est obtenue par les étapes consistant à
- si souhaité, soumettre les déchets à un traitement de réduction de taille ;
- éliminer des métaux ferreux à partir des déchets ;
- séparer les déchets (de taille réduite) dans une étape de fractionnement par taille, en séparant ainsi les déchets en une première fraction de taille comprenant de grandes particules de matériau de déchets, une deuxième fraction de taille comprenant de petites particules matériau de déchets et - si souhaité - une troisième fraction de taille comprenant des particules de matériau de déchets d'une taille intermédiaire ; et
- récupérer la fraction de composé carboné à partir d'une ou plusieurs des fractions de taille, dans laquelle
- si la fraction de composé carboné est récupérée à partir de plus d'une fraction de taille, ces fractions récupérées peuvent être combinées avant utilisation ultérieure.

14. Méthode selon la revendication 13, dans laquelle la récupération de la fraction de composé carboné comprend l'étape consistant à soumettre la fraction de taille à une séparation basée sur la densité dans laquelle des matériaux de composé carboné ayant une densité relativement faible (tels que le papier et les plastiques basse densité) sont séparés de matériaux ayant une densité relativement élevée (tels que des métaux, des plastiques haute densité, du bois), en formant ainsi une fraction de matériaux ayant une densité relativement élevée et une fraction de matériaux ayant une densité relativement basse.

15. Méthode selon la revendication 14, dans laquelle des matériaux de composé carboné sont récupérés à partir de ladite fraction de matériaux ayant une densité relativement élevée.

16. Méthode selon la revendication 14 ou 15, dans laquelle des métaux sont récupérés à partir de la deuxième fraction de tailles comprenant de petites particules de matériau de déchets, et le reste de ladite deuxième fraction de taille est soumis à une étape de séparation dans laquelle des matériaux inorganiques (telles que du sable et des matériaux inorganiques plus grossiers) sont éliminés de la deuxième fraction de taille, laquelle séparation comprend une étape de séparation de densité dans laquelle une fraction enrichie en matériaux de composé carboné et une fraction enrichie en matériaux inorganiques est obtenue, de préférence une méthode dans laquelle l'étape de séparation de densité, dans laquelle la fraction enrichie en matériaux de composé carboné est obtenue, est une technique de séparation à base d'eau, et dans laquelle la fraction enrichie en matériaux de composé carboné est soumise à une étape de séparation de taille, obtenant ainsi une boue riche en matières organiques et une fraction de composé carboné.

17. Méthode selon l'une quelconque des revendications précédentes, dans laquelle les étapes de la méthode sont sélectionnées sur la base d'un scénario de méthode prédéterminé.

18. Méthode selon l'une quelconque des revendications précédentes, dans laquelle le laitier est du laitier vitrifié.

19. Méthode selon l'une quelconque des revendications précédentes, dans laquelle le matériau de construction est un ciment de remplacement, de préférence un ciment de remplacement par activation alcaline.

20. Méthode selon l'une quelconque des revendications précédentes, dans laquelle le matériau de construction est un agrégat de construction.

21. Méthode selon l'une quelconque des revendications précédentes, dans laquelle un produit chimique d'intérêt industriel est obtenu, choisi dans le groupe constitué par le méthane, le pétrole synthétique, l'ammoniac et le méthanol, qui est obtenu en fabriquant ledit produit chimique d'intérêt industriel à partir du gaz de synthèse.

22. Méthode selon l'une quelconque des revendications précédentes, dans laquelle le CO₂ est fabriqué à partir du gaz de synthèse.
